(19) Europäisches Patentamt
European Patent Office
Office européen des brevets

(11) EP 4 390 777 A1

(12) **EUROPEAN PATENT APPLICATION**
published in accordance with Art. 153(4) EPC

(43) Date of publication:
26.06.2024 Bulletin 2024/26

(21) Application number: 21954186.9

(22) Date of filing: 18.08.2021

(51) International Patent Classification (IPC):
*G06N 10/00* (2022.01)

(52) Cooperative Patent Classification (CPC):
G06N 10/00

(86) International application number:
PCT/JP2021/030184

(87) International publication number:
WO 2023/021613 (23.02.2023 Gazette 2023/08)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(71) Applicant: **FUJITSU LIMITED**
**Kawasaki-shi, Kanagawa 211-8588 (JP)**

(72) Inventor: **ISHII, Masatoshi**
**Kawasaki-shi, Kanagawa 211-8588 (JP)**

(74) Representative: **Haseltine Lake Kempner LLP**
**Cheapside House**
**138 Cheapside**
**London EC2V 6BJ (GB)**

(54) **QUANTUM CIRCUIT DESIGN DEVICE, QUANTUM CIRCUIT DESIGN PROGRAM, AND QUANTUM CIRCUIT DESIGN METHOD**

(57)     Errors in quantum computation are reduced.

A quantum circuit design apparatus detects a first gate indicating a predetermined operation on a plurality of first quantum bits among a plurality of quantum bits included in a first quantum circuit, which includes a plurality of elements and indicates an operation order on the plurality of quantum bits by an arrangement of each of the plurality of elements, and a second gate which indicates the predetermined operation. Further, the quantum circuit design apparatus generates a second quantum circuit by converting the first gate into a first equivalent circuit in the first quantum circuit and converting the second gate into a second equivalent circuit in which the plurality of elements are symmetrically moved in an arrangement direction of the plurality of first quantum bit.

FIG. 13

EP 4 390 777 A1

**Description**

TECHNICAL FIELD

The present embodiment relates to a quantum circuit design apparatus, a quantum circuit design program, and a quantum circuit design method.

BACKGROUND ART

There is a quantum computer that performs calculation at a higher speed than a classical computer by using the quantum property. The quantum gate type quantum computer performs quantum computation by performing gate operations on quantum bits in an order indicated by a quantum circuit.

As a quantum algorithm executed by the quantum gate type quantum computer, for example, there is Grover's algorithm for searching data. For example, when one data is searched from N pieces of data, a search can be performed by $N^{1/2}$ times of arithmetic operations according to the Grover algorithm, while an average of a number of times of arithmetic operations by the classical computer is N/2 times.

As a technique related to the quantum computer, for example, a quantum algorithm execution apparatus capable of causing the classical computer to directly execute the quantum algorithm has been proposed. Also, for example, quantum circuit design with the Grover's algorithm has been proposed, in which inversion and computation steps are repeated to determine a search result corresponding to a target quantum state according to Grover's algorithm. Further, for example, a quantum gate that executes a Grover's quantum algorithm using a two variable function having a vector basis of n quantum bits has been proposed.

PRIOR ART DOCUMENT

Patent Document

[Patent Document 1] Japanese Laid-open Patent Publication No. 2005-250563
[Patent Document 2] U.S. Patent No. 7028275
[Patent Document 3] U.S. Patent Application Publication No. 2004/0162640

SUMMARY OF INVENTION

TECHNICAL PROBLEM

The quantum bit is realized by using, for example, superconductivity, an ion trap or the like. In a gate operation on the quantum bit, the quantum computer irradiates the quantum bit with microwaves, for example. Such noise included in the gate operation on the quantum bit may cause an error in a quantum computation.

In one aspect, the present disclosure is directed to reducing errors in the quantum computation.

SOLUTION TO PROBLEM

In one aspect, a quantum circuit design apparatus having a processing unit is provided. The processing unit detects, for a first quantum circuit that is a quantum circuit including a plurality of elements and indicates an operation order for each of a plurality of quantum bits by an arrangement of each of the plurality of elements in the quantum circuit, a first gate indicating a predetermined operation for a plurality of first quantum bits among the plurality of quantum bits and a second gate indicating the predetermined operation, which are included in the first quantum circuit. Further, the processing unit generates a second quantum circuit by converting the first gate in the first quantum circuit into a first equivalent circuit and converting the second gate into a second equivalent circuit in which elements of the first equivalent circuit are symmetrically moved in an arrangement direction of the plurality of first quantum bits.

EFFECT OF INVENTION

According to one aspect, errors in the quantum computation may be reduced. The above and other objects, features and advantages of the present disclosure will become apparent from the following description taken in conjunction with the accompanying drawings which illustrate preferred embodiments as examples of the disclosure.

BRIEF DESCRIPTION OF DRAWINGS

FIG. 1 is a diagram illustrating an example of a quantum circuit design method according to a first embodiment;
FIG. 2 is a diagram illustrating an example of a system configuration according to a second embodiment;
FIG. 3 is a diagram illustrating an example of a hardware configuration of a control computer;
FIG. 4 is a diagram illustrating an example of a change in probability amplitude by the Grover's algorithm.
FIG. 5 is a diagram illustrating an example of a quantum circuit for executing the Grover's algorithm with three quantum bits.
FIG. 6 is a diagram (part 1) illustrating an example of an equivalent circuit of a CCZ gate;
FIG. 7 is a block diagram illustrating an example of functions of the control computer;
FIG. 8 is a diagram illustrating an example of conversion information;
FIG. 9 is a diagram illustrating an example of a conversion process of a CCX gate;
FIG. 10 is a diagram illustrating an example of a conversion process of a CnNOT gate;
FIG. 11 is a diagram illustrating an example of an equivalent circuit of the CnNOT gate;
FIG. 12 is a flowchart illustrating an example of a procedure of a quantum circuit conversion process;
FIG. 13 is a diagram illustrating an example of a quantum circuit after conversion;
FIG. 14 is a diagram (part 1) illustrating an example of a relationship between a quantum computation result and noise;
FIG. 15 is a diagram (part 2) illustrating an example of the equivalent circuit of the CCZ gate;
FIG. 16 is a diagram (part 2) illustrating an example of the relationship between the quantum computation result and the noise;
FIG. 17 is a diagram (part 3) illustrating an example of the equivalent circuit of the CCZ gate;
FIG. 18 is a diagram (part 3) illustrating an example of the relationship between the quantum computation result and the noise;
FIG. 19 is a diagram (part 4) illustrating an example of the relationship between the quantum computation result and the noise;
FIG. 20 is a diagram illustrating an example of a quantum circuit for executing the Grover's algorithm with six quantum bits.
FIG. 21 is a diagram (part 5) illustrating an example of the relationship between the quantum computation result and the noise;

DESCRIPTION OF EMBODIMENTS

Hereinafter, the present embodiments will be described with reference to the drawings. Note that each of the embodiments may be implemented by combining a plurality of embodiments within a consistent range.

[First Embodiment]

First, a first embodiment will be described. The first embodiment is a quantum circuit design method capable of reducing errors in the quantum computation.

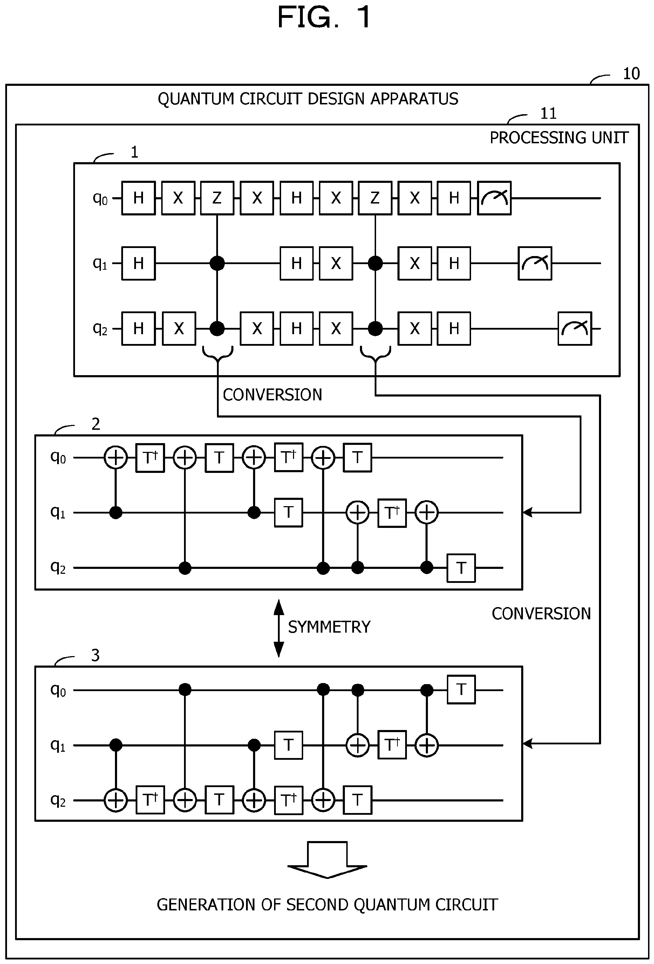

FIG. 1 is a diagram illustrating an example of a quantum circuit design method according to the first embodiment. FIG. 1 illustrates a quantum circuit design apparatus 10 for implementing a quantum circuit design method capable of reducing errors in the quantum computation. The quantum circuit design apparatus 10 can implement the quantum circuit design method capable of reducing errors in the quantum computation by executing, for example, a quantum circuit design program.
The quantum circuit design apparatus 10 includes a processing unit 11. The processing unit 11 is, for example, a processor or an arithmetic circuit included in the quantum circuit design apparatus 10. The processing unit 11 generates a second quantum circuit by converting elements included in the first quantum circuit 1. The first quantum circuit 1 is a quantum circuit including a plurality of elements, and indicates an operation order on the respective quantum bits $q_0$, $q_1$, and $q_2$ by the arrangement of the respective elements in the quantum circuit. For example, the first quantum circuit 1 includes lines corresponding to the respective quantum bits $q_0$, $q_1$, and $q_2$. In the first quantum circuit 1, a line corresponding to the quantum bit $q_0$, a line corresponding to the quantum bit $q_1$, and a line corresponding to the quantum bit $q_2$ are arranged in order from the top. On each line of the first quantum circuit 1, an element indicating an operation on the quantum state of the corresponding quantum bit is arranged. In the first quantum circuit 1, an element indicating an operation performed earlier is arranged more to the left.
The elements disposed in the first quantum circuit 1 include, for example, an H gate, an X gate, a CCZ gate, an measurement and the like. Here, the CCZ gate is arranged by setting two control bits and one target bit. The CCZ gate indicates that the Z gate is operated (a phase is inverted) on the one target bit when the two control bits are "1". Note that the CCZ gate is equivalent to a case where the two control bits and the one target bit are set in any combination from three quantum bits.

The processing unit 11 detects a first gate indicating a predetermined operation on a plurality of first quantum bits among the quantum bits $q_0$, $q_1$, and $q_2$ included in the first quantum circuit 1 and a second gate indicating the predetermined operation. Here, the predetermined operation is an operation of inverting the phase of the one target bit of the quantum bits $q_0$, $q_1$, and $q_2$ in accordance with the two control bits of the three quantum bits $q_0$, $q_1$, and $q_2$. For example, the processing unit 11 detects two CCZ gates for the quantum bits $q_0$, $q_1$, and $q_2$.

Then, the processing unit 11 generates a second quantum circuit by converting the first gate in the first quantum circuit into a first equivalent circuit 2 and converting the second gate into a second equivalent circuit 3 in which elements of the first equivalent circuit 2 are symmetrically moved in an arrangement direction of the plurality of first quantum bits. For example, the processing unit 11 converts the CCZ gate for the quantum bits $q_0$, $q_1$, and $q_2$ included in the first quantum circuit 1 into the first equivalent circuit 2 that is a combination of the CX gate, the T gate and the $T^\dagger$ gate and is equivalent to the CCZ gate for the quantum bits $q_0$, $q_1$, and $q_2$. Further, the processing unit 11 converts the CCZ gate for the quantum bits $q_0$, $q_1$, and $q_2$, which is included in the first quantum circuit 1 and is different from the CCZ gate converted into the first equivalent circuit 2, into the second equivalent circuit 3 having an arrangement in which the elements of the first equivalent circuit 2 are symmetrically moved with respect to the line corresponding to the qubit $q_1$ as an axis.

Like this, the processing unit 11 detects the first gate and the second gate indicating the predetermined operation on the plurality of first quantum bits among the quantum bits $q_0$, $q_1$, and $q_2$ included in the first quantum circuit 1 indicating the operation order on each of the quantum bits $q_0$, $q_1$, and $q_2$ by the arrangement of the elements. Then, the processing unit 11 converts the first gate in the first quantum circuit 1 into the first equivalent circuit 2, and generates the second quantum circuit in by converting the first gate in the first quantum circuit into the first equivalent circuit 2 and converting the second gate into the second equivalent circuit 3 in which the elements of the first equivalent circuit 2 are symmetrically moved in the arrangement direction of the plurality of first quantum bits.

In the quantum computation, an error may occur easily in each quantum bit due to a noise included in a gate operation on the quantum bit. Therefore, if a number of gate operations on each quantum bit is biased, an error is likely to occur in a quantum bit having a large number of gate operations. In the second quantum circuit, the second equivalent circuit 3 is arranged by symmetrically moving the elements of the first equivalent circuit 2 in the arrangement direction of the plurality of first quantum bits, and thus the number of gate operations on each quantum bit is less biased. Therefore, the quantum computer operates the quantum bits according to the second quantum circuit, and thus it is possible to reduce the bias of the quantum bits which are influenced by the noise. Therefore, the quantum circuit design apparatus 10 may reduce errors in the quantum computation.

Further, the predetermined operation is an operation of inverting the phase of the one target bit of the three first quantum bits in accordance with the two control bits of the three first quantum bits. Thus, the quantum circuit design apparatus 10 may reduce errors in the quantum computation including the CCZ gate.

Note that the processing unit 11 may convert a third gate that inverts a bit of the one target bit of the first quantum bits in accordance with the two control bits of the first quantum bits into a third equivalent circuit including the predetermined operation. Thus, the quantum circuit design apparatus 10 may reduce errors in the quantum computation including the CCX gate.

Further, the processing unit 11 may convert a fourth gate that inverts a bit of one target bit of the second quantum bit in accordance with three or more control bits of the second quantum bit including the first quantum bit into a fourth equivalent circuit including the third gate. Thus, the quantum circuit design apparatus 10 may reduce errors in the quantum computation including the CnN0T gate.

[Second Embodiment]

Next, a second embodiment will be described. The second embodiment is a system in which a quantum computer performs quantum computation in accordance with a quantum circuit.

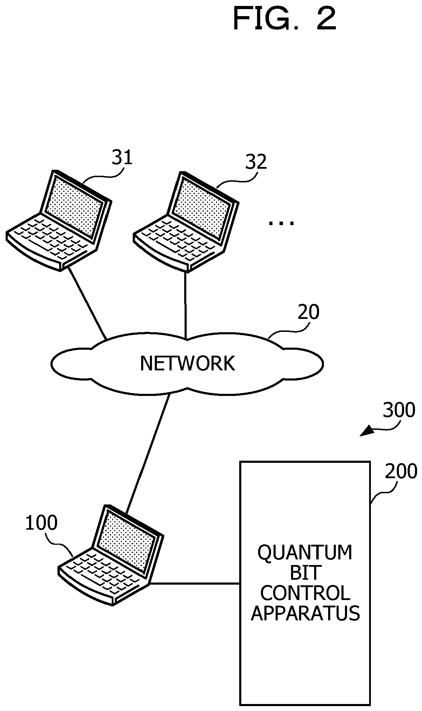

FIG. 2 is a diagram illustrating an example of a system configuration according to the second embodiment. The quantum computer 300 is a quantum gate type quantum computer. The quantum computer 300 includes a control computer 100 and a quantum bit control apparatus 200. The control computer 100 is coupled to terminal devices 31, 32,... via a network 20. The terminal devices 31, 32,... are computers used by users who request the quantum computation by the quantum computer 300. The control computer 100 receives quantum circuits from the terminal devices 31, 32,.... The quantum circuit indicates an operation order on the quantum bit by an arrangement of elements such as gates. The quantum bit is a bit capable of expressing a state of superposition of a state of "0" and a state of "1".

The control computer 100 instructs the quantum bit control apparatus 200 to control the quantum bit according to the quantum circuit received from the terminal devices 31, 32,.... Further, the control computer 100 acquires measurement result of each quantum bit from the quantum bit control apparatus 200.

The quantum bit control apparatus 200 includes a plurality of quantum bits and a device for operating each of the plurality of quantum bits. The plurality of quantum bits included in the quantum bit control apparatus 200 may be, for example, superconducting quantum bits or quantum bits using an ion trap. Further, the quantum bit control apparatus 200 may include a refrigerator for cooling the quantum bit.

The device for operating each of the plurality of quantum bits included in the quantum bit control apparatus 200 irradiates the quantum bit with a microwave, for example, in response to an instruction from the control computer 100. Further, the device for operating each of the plurality of quantum bits measures the state of each of the plurality of quantum bits and transmits the state to the control computer 100.

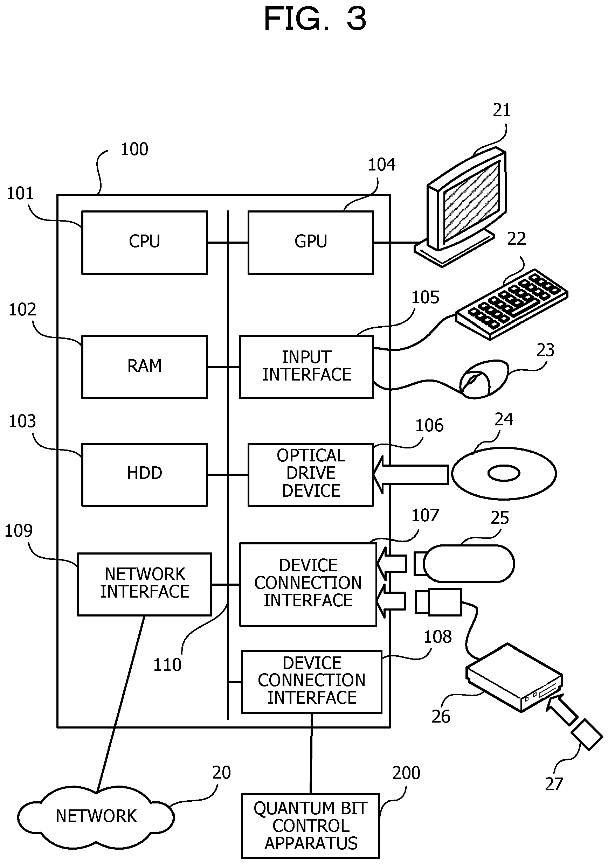

FIG. 3 is a diagram illustrating an example of a hardware configuration of the control computer. The control computer 100 is controlled entirely by a central processing unit (CPU) 101. The CPU 101 is a processor that executes instructions of a program. Note that the CPU 101 may include a plurality of processor cores. Further, the CPU 101 may be a plurality of processors, and may be a micro processing unit (MPU), a digital signal processor (DSP) or the like. Further, at least a part of functions realized by the CPU 101 executing the program may be realized by an electronic circuit such as an application specific integrated circuit (ASIC) or a programmable logic device (PLD). A Random Access Memory (RAM) 102 and a plurality of peripheral devices are coupled to the CPU 101 via a bus 110.

RAM 102 is a main storage device of the control computer 100. The RAM 102 temporarily stores at least a part of a program of an Operating System (OS) and an application program to be executed by the CPU 101. Further, the RAM 102 stores various kinds of information used for processing by the CPU 101. Note that the control computer 100 may include a memory of a type other than the RAM, and may include a plurality of memories.

The peripheral devices coupled to the bus 110 include a hard disk drive (HDD) 103, a graphics processing unit (GPU) 104, an input interface 105, an optical drive device 106, a device connection interface 107,108, and a network interface 109.

HDD 103 is an auxiliary storage device of the control computer 100. The HDD 103 magnetically writes and reads data to and from a magnetic disc incorporated therein. The HDD 103 stores the program of the OS, the application program, and various types of data. Note that the control computer 100 may include another type of an auxiliary storage device such as a flash memory or a solid state drive (SSD), or may include a plurality of auxiliary storage devices.

A monitor 21 is coupled to the GPU 104. The GPU 104 displays an image on a screen of the monitor 21 in accordance with an instruction from the CPU 101. The monitor 21 may be a display device using organic electroluminescence (EL), a liquid crystal display device or the like.

The input interface 105 is coupled to a keyboard 22 and a mouse 23. The input interface 105 transmits signals sent from the keyboard 22 and the mouse 23 to the CPU 101. Note that the mouse 23 is an example of a pointing device, and other pointing devices may be used. The other pointing devices include a touch panel, a tablet, a touch pad, a trackball and the like.

The optical drive device 106 reads data recorded on an optical disc 24 by using a laser beam or the like. The optical disk 24 is a portable recording medium on which data is recorded so as to be readable by reflection of light. The optical disc 24 may be a digital versatile disc (DVD), a DVD-RAM, a compact disc read only memory (CD-ROM), a CD-recordable (R)/ReWritable (RW), or the like.

The device connection interface 107 is a communication interface for coupling the peripheral devices to the control computer 100. For example, the memory device 25 and the memory reader/writer 26 may be coupled to the device connection interface 107. The memory device 25 is a recording medium having a function of communicating with the device connection interface 107. The memory reader/writer 26 is a device that writes data to a memory card 27 or reads data from the memory card 27. The memory card 27 is a card-type recording medium.

The device connection interface 108 is a communication interface for coupling the quantum bit control apparatus 200 to the control computer 100. The control computer 100 transmits an instruction for controlling the quantum bit to the quantum bit control apparatus 200 via the device connection interface 108.

The network interface 109 is coupled to the network 20. The network interface 109 transmits and receives data to and from another computer or a communication device via the network 20.

The control computer 100 may realize the processing functions of the second embodiment by the hardware configuration described above. Note that the quantum circuit design apparatus 10 according to the first embodiment may also be implemented by the same hardware as the control computer 100 illustrated in FIG. 3. Further the CPU101 is an example of the processing unit 11 described in the first embodiment.

The control computer 100 realizes the processing functions of the second embodiment by executing a program recorded in a computer-readable recording medium, for example. The program describing processing contents to be executed by the control computer 100 may be recorded in various recording medium. For example, the program to be executed by the control computer 100 may be stored in a HDD 103. The CPU 101 loads at least a part of the program in the HDD 103 into the RAM 102 and executes the program. Further, the program to be executed by the control computer 100 may be recorded in a portable recording medium such as the optical disk 24, the memory device 25, or the memory card 27. The program stored in the portable recording medium is installed in the HDD 103 and then becomes executable, under the control of the CPU 101, for example. Alternatively, the CPU 101 may directly read the program from the portable recording medium and execute the program.

In the second embodiment, the quantum computer 300 performs the quantum computation. As a quantum algorithm executable by the quantum computer 300, for example, there is the Grover's algorithm.

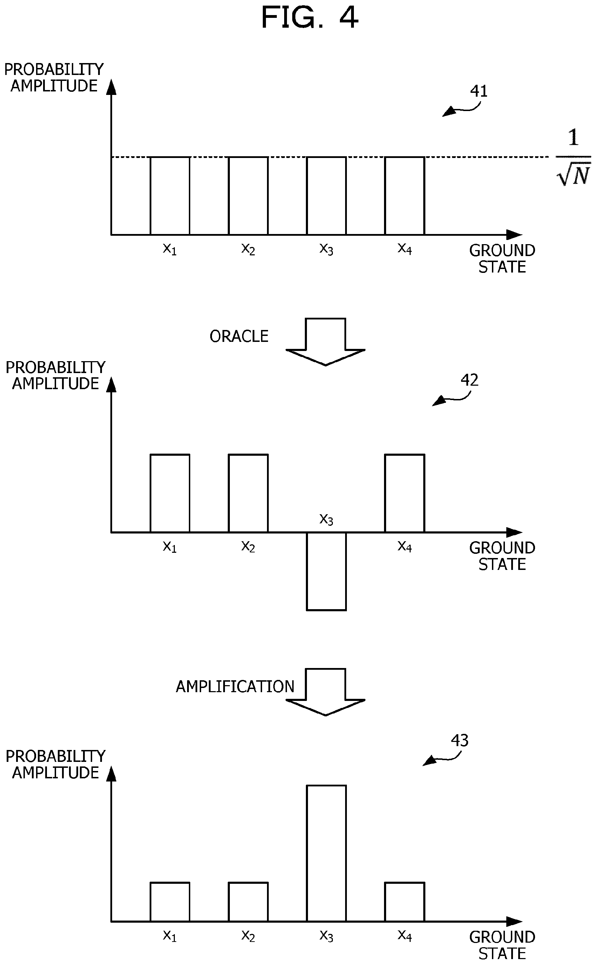

FIG. 4 is a diagram illustrating an example of a change in probability amplitude by the Grover's algorithm. In the Grover's algorithm, the following inversion amplification process of the probability amplitude is repeated $N^{1/2}$ times, thereby enabling a search for a correct answer data from N pieces of data.

A graph 41 illustrates the probability amplitude of each of ground states $x_1$ to $x_4$ in the superposition state of the ground states $x_1$, $x_2$, $x_3$, and $x_4$. Note that the ground states $x_1$ to $x_4$ correspond to data to be searched, respectively. In the graph 41, the probability amplitude of each of the ground states $x_1$ to $x_4$ is $N^{-1/2}$.

In the inversion process of the Grover's algorithm, the oracle $U_f$ is applied. The oracle $U_f$ is expressed by the following Equation (1).

[Equation 1]

$$U_f = -\sum_x (-1)^{f(x)} |x\rangle\langle x| = I - 2|v\rangle\langle v| \tag{1}$$

The x in Equation (1) represents each ground state. In addition, v in Equation (1) is a ground state corresponding to the correct answer data. Further, f (x) in Equation (1) is a function that satisfies f(v)=1, and f(x)=0 at x other than v. In addition, I in Equation (1) is a unit matrix of N rows and N columns.

A graph 42 indicates the probability amplitude of each of the ground states $x_1$ to $x_4$ when the oracle $U_f$ is applied to the superposition states of the ground states $x_1$ to $x_4$ indicated by the graph 41. Note that it is assumed that the ground state corresponding to the correct answer data is the ground state $x_3$. In the graph 42, only the probability amplitude of the ground state $x_3$ among the ground states $x_1$ to $x_4$ has a reversed sign with respect to the graph 41.

In the amplification process of the Grover's algorithm, -W represented by the following Equation (2) is applied.

[Equation 2]

$$-W = 2|w\rangle\langle w| - I \tag{2}$$

The symbol w in Equation (2) represents a state of superposition of all states. A graph 43 indicates the probability amplitude of the respective ground states $x_1$ to $x_4$ when -W is applied to the state indicated by the graph 42. In the graph 43, the probability amplitudes of the ground states $x_1$ to $x_4$ are inverted around an average value with respect to the graph 42. By such an inversion amplification process, the probability magnitude of the ground state $x_3$ corresponding to the correct answer data becomes larger than those of the ground states $x_1$, $x_2$, and $x_4$.

Next, a specific example of executing the Grover's algorithm described above with three quantum bits will be described. The state $|\phi\rangle$ of the superposition of the states represented by the three quantum bits is represented by the following Equation (3).

[Equation 3]

$$|\psi\rangle = \left(\frac{|0\rangle + |1\rangle}{\sqrt{2}}\right)^{\otimes 3}$$
$$= \frac{1}{\sqrt{8}} (|000\rangle + |001\rangle + |010\rangle + |011\rangle + |100\rangle + |101\rangle + |110\rangle + |111\rangle) \tag{3}$$

Equation (3) indicates that the probability amplitude of the state "0" and the probability amplitude of the state "1" are $2^{-\frac{1}{2}}$ for each of the three quantum bits. In addition, Equation (3) indicates that the probability amplitude of each of the states "000" to "111" indicated by three quantum bits is $8^{-\frac{1}{2}}$. Here, it is assumed that the state "010" corresponds to the correct answer data, and the state $U_f|\phi\rangle$ to which the oracle $U_f$ is applied is represented by the following Equation (4).

[Equation 4]

$$U_f|\psi\rangle = \frac{1}{\sqrt{8}}(|000\rangle + |001\rangle - |010\rangle + |011\rangle + |100\rangle + |101\rangle + |110\rangle + |111\rangle) \quad (4)$$

Equation (4) indicates that the probability amplitude of the state "010" among the states "000" to "111" is $-8^{-1/2}$, and the probability amplitude of the states other than the state "010" is $8^{-1/2}$. For example, Equation (4) indicates a state in which the sign of the probability amplitude of the state "010" is inverted from the state indicated by Equation (3). Further, the average value of the probability amplitude in the state $U_f|\phi\rangle$ is expressed by the following Equation (5).
[Equation 5]

$$\left(7\frac{1}{\sqrt{8}} - \frac{1}{\sqrt{8}}\right)/8 = \frac{6}{8}\frac{1}{\sqrt{8}} \quad (5)$$

A state $-WU_f|\phi\rangle$ in which $-W$ is applied to state $U_f|\phi\rangle$ is expressed by the following Equation (6).
[Equation 6]

$$-WU_f|\psi\rangle = \left(\frac{6}{8}\frac{1}{\sqrt{8}} - \frac{1}{\sqrt{8}} + \frac{6}{8}\frac{1}{\sqrt{8}}\right)|000\rangle + \cdots + \left(\frac{6}{8}\frac{1}{\sqrt{8}} + \frac{1}{\sqrt{8}} + \frac{6}{8}\frac{1}{\sqrt{8}}\right)|010\rangle + \cdots$$
$$+ \left(\frac{6}{8}\frac{1}{\sqrt{8}} - \frac{1}{\sqrt{8}} + \frac{6}{8}\frac{1}{\sqrt{8}}\right)|111\rangle \quad (6)$$

Equation (6) represents a state in which the probability amplitudes of the states "000" to "111" are inverted around the average value of the probability amplitudes represented by Equation (5) from the state represented by Equation (4). The probability of becoming the state "010" in the state $-WU_f|\phi\rangle$ is the square of the probability amplitude, and is therefore expressed by the following Equation (7).
[Equation 7]

$$\left(\frac{6}{8}\frac{1}{\sqrt{8}} + \frac{1}{\sqrt{8}} + \frac{6}{8}\frac{1}{\sqrt{8}}\right)^2 = 0.781 \quad (7)$$

As described above, $-WU_f$ is applied to the state $|\phi\rangle$ of the superposition of the states "000" to "111", and thus the probability of becoming the state "010" increases from 0.125, which is the probability of randomly becoming one state of eight states, to 0.781. Note that when $-WU_f$ is applied to the state $|\phi\rangle$ twice, the probability of becoming the state "010" is 0.945.

Next, a quantum circuit for causing the quantum computer 300 to execute the Grover's algorithm will be described.

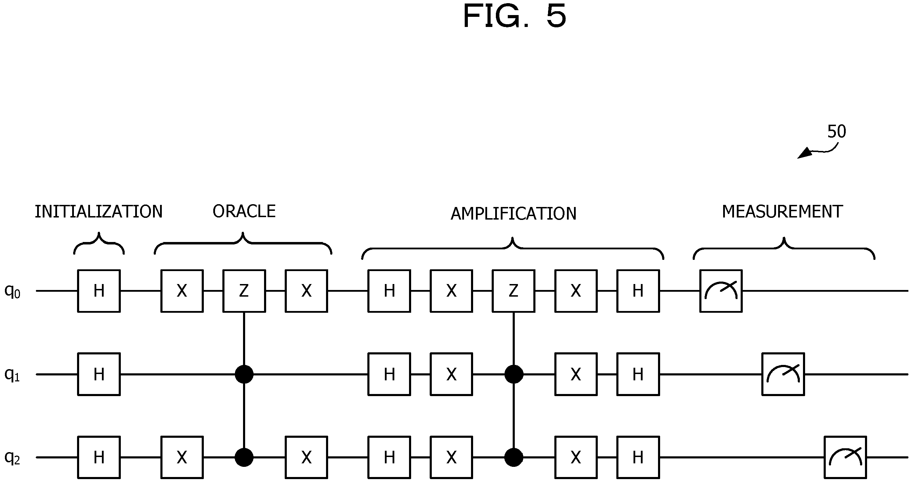

FIG. 5 is a diagram illustrating an example of a quantum circuit that executes the Grover's algorithm with three quantum bits. The quantum circuit 50 indicates the operation order of the respective quantum bits $q_0$, $q_1$, and $q_2$ when the Grover's algorithm with a number of iterations of 1 is executed with three quantum bits. The quantum circuit 50 has lines corresponding to the respective quantum bits $q_0$, $q_1$, and $q_2$. In the quantum circuit 50, a line corresponding to the quantum bit $q_0$, a line corresponding to the quantum bit $q_1$, and a line corresponding to the quantum bit $q_2$ are arranged in order from the top. In the quantum circuit 50, an element indicating an operation performed earlier is arranged more to the left.

A block which is denoted by H and is arranged on a line corresponding to each of the quantum bits $q_0$, $q_1$, and $q_2$ in the quantum circuit 50 indicates an H gate. The H gate indicates an operation for creating a state of superposition. In addition, a block which is denoted by X and is arranged X on the line corresponding to each of the qubits $q_0$, $q_1$, and $q_2$ in the quantum circuit 50 indicates an X gate. The X gate indicates an operation of inverting a bit of the quantum bit corresponding to the arranged line.

Further, a block which is denoted by Z and is arranged on the line corresponding to each of the quantum bits $q_0$, $q_1$, and $q_2$ and two points of arranged on the line corresponding to each of the quantum bits $q_0$, $q_1$, and $q_2$ which are coupled to the block denoted by Z by a line indicate a CCZ gate. Note that the block denoted by Z is arranged on a line corresponding to a quantum bit serving as a target bit of the CCZ gate, and the two points are arranged on lines corresponding to each of quantum bits serving as two control bits of the CCZ gate. The CCZ gate indicates that the Z gate is operated (the phase is inverted) on one target bit when the two control bits are "1".

Note that the CCZ gate is equivalent to a case where two control bits and one target bit are set in any combination from three quantum bits. For example, a CCZ gate in which the quantum bits $q_1$ and $q_2$ are set as the control bits and the qubit $q_0$ is set as the target bit may be replaced with a CCZ gate in which the quantum bits $q_0$ and $q_2$ are set as the control bits and the quantum bit $q_1$ is set as the target bit. Further, a CCZ gate in which the quantum bits $q_1$ and $q_2$ are set as the control bits and the quantum bit $q_0$ is set as the target bit may be replaced with a CCZ gate in which the quantum bits $q_0$ and $q_1$ are set as the control bits and the quantum bit $q_2$ is set as the target bit. Hereinafter, a CCZ gate in which the two control bits and the one target bit are set from the quantum bits $q_0$, $q_1$, and $q_2$ may be referred to as a CCZ gate for the quantum bits $q_0$, $q_1$, and $q_2$.

A block in which a figure, which is obtained by combining a semicircular arc and a straight line and is arranged on the line corresponding to each of the quantum bits $q_0$, $q_1$, and $q_2$ of quantum circuit 50, is described indicates a measurement. The measurement determines the quantum bits $q_0$, $q_1$, and $q_2$ to be in the state of "0" or "1".

At the left end of the quantum circuit 50, the H gates for the respective quantum bits $q_0$, $q_1$, and $q_2$ are arranged. As the first operation illustrated in the quantum circuit 50, the H gate is operated on each of the quantum bits $q_0$, $q_1$, and $q_2$, and thus the quantum bits $q_0$, $q_1$, and $q_2$ become the superposition state illustrated in Equation (3) (initialized). Further, in the quantum circuit 50, a combination of the X gate and the CCZ gate indicating a process of applying an oracle is arranged on the right side of the H gate indicating an initialization. Further, in the quantum circuit 50, a combination of the H gate, the X gate, and the CCZ gate indicating the amplification process is arranged on the right side of the combination of gates indicating the oracle. Further, in the quantum circuit 50, observations for the respective quantum bits $q_0$, $q_1$, and $q_2$ are arranged on the right side of the combination of the gates indicating the amplification process. The observation illustrated in the quantum circuit 50 outputs a result obtained by performing the inversion amplification process of the Grover's algorithm once.

Note that the quantum computer 300 may include an apparatus that performs a gate operation on two or less quantum bits and may not include an apparatus that may perform the gate operation on three or more quantum bits. Therefore, a gate for three quantum bits such as a CCZ gate is converted into an equivalent circuit in which gates for two quantum bits or one quantum bit are combined.

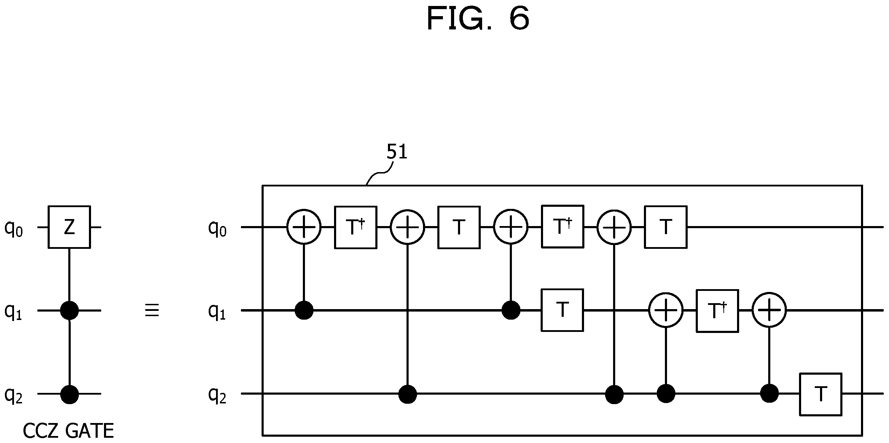

FIG. 6 is a diagram (part 1) illustrating an example of an equivalent circuit of a CCZ gate. The equivalent circuit 51 is equivalent to the CCZ gate for the quantum bits $q_0$, $q_1$, and $q_2$, and is a quantum circuit in which the gates for the two quantum bits or the one quantum bit are combined. A block in which is denoted as T and is arranged on a line corresponding to each of the quantum bits $q_0$, $q_1$, and $q_2$ in the equivalent circuit 51 indicates a T gate. The T gate indicates an operation of rotating a phase by a predetermined value. In addition, a block in which is denoted as $T^\dagger$ and is arranged on a line corresponding to each of the quantum bits $q_0$, $q_1$, and $q_2$ in the equivalent circuit 51 indicates a $T^\dagger$ gate. $T^\dagger$ gate indicates an operation of rotating the phase by the predetermined value in an opposite direction to the T gate.

Further, a symbol obtained by combining a circle and + and arranged on the lines corresponding to the respective quantum bits $q_0$, $q_1$, and $q_2$ and a point arranged on the lines corresponding to the respective quantum bits $q_0$, $q_1$, and $q_2$ and coupled to the symbol by lines indicate a CNOT gate. Note that the symbol obtained by combining the circle and the + is arranged on a line corresponding to a quantum bit serving as a target bit of the CNOT gate, and the point is arranged on a line corresponding to a quantum bit serving as a control bit of the CNOT gate. The CNOT gate indicates that the bit of the target bit is inverted when the control bit is "1".

In this way, the CCZ gate may be converted into the equivalent circuit 51 in which the gates for the two quantum bits or the one quantum bit are combined. Therefore, when the quantum computer 300 executes the process indicated by the quantum circuit 50, it is conceivable that the control computer 100 may generate a quantum circuit in which each of the two CCZ gates included in the quantum circuit 50 is converted into the equivalent circuit 51. Then, the control computer 100 may instruct the quantum bit control apparatus 200 to control the quantum bit according to the generated quantum circuit.

Here, in the quantum computation by the quantum computer 300, an error may occur in each quantum bit due to noise included in the gate operation. Therefore, when the two CCZ gates included in the quantum circuit 50 are converted into the equivalent circuit 51, the error is likely to occur in a quantum bit having a large number of gate operations in the equivalent circuit 51. Therefore, in the second embodiment, when a plurality of CCZ gates are included in the quantum circuit, the control computer 100 converts some of the CCZ gates into the equivalent circuit 51 and converts the remaining CCZ gates into an equivalent circuit having an arrangement in which each element of the equivalent circuit 51 is symmetrically moved up and down.

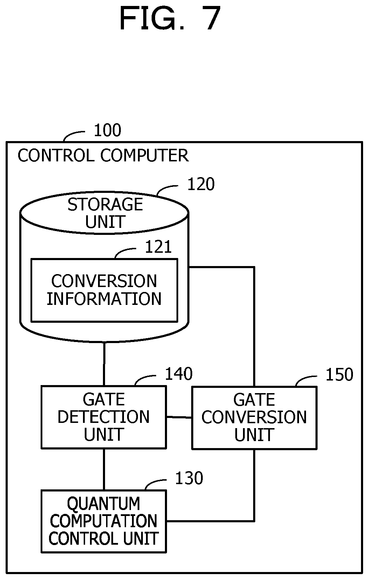

Next, the functions of the control computer 100 will be described in detail. FIG. 7 is a block diagram illustrating an example of the functions of the control computer. The control computer 100 includes a storage unit 120, a quantum computation control unit 130, a gate detection unit 140, and a gate conversion unit 150. The storage unit 120 stores conversion information 121. In the conversion information 121, a gate to be converted and an equivalent circuit are registered in association with each other.

The quantum computation control unit 130 controls the quantum computation. First, the quantum computation control unit 130 acquires a quantum circuit. For example, the quantum computation control unit 130 receives a request for the quantum computation by the quantum computer 300 and the quantum circuit from the terminal devices 31,32,.... Then, the quantum computation control unit 130 controls the quantum bit control apparatus 200 in accordance with the quantum circuit converted by the gate conversion unit 150.

The gate detection unit 140 detects a CCZ gate from the quantum circuit acquired by the quantum computation control unit 130. Further, when a CCZ gate is detected from the quantum circuit, the gate detection unit 140 detects a CCZ gate for the same combination of quantum bits as the detected CCZ gate.

The gate conversion unit 150 converts gates for three or more quantum bits included in the quantum circuit into an equivalent circuit. For example, the gate conversion unit 150 converts the CnN0T gate included in the quantum circuit into a combination of a CCX gate and a CNOT gate. Note that the CCX gate is a gate that inverts a bit of one target bit when two control bits are "1". Further, the CnN0T gate is a gate that inverts a bit of one target bit when the n control bits are "1". Further, the gate conversion unit 150 converts the CCX gate included in the quantum circuit into a combination of the CCZ gate and the H gate.

The gate conversion unit 150 converts the CCZ gate detected by the gate detection unit 140 into an equivalent circuit that is a combination of operations on one or two quantum bits. For example, the gate conversion unit 150 converts the CCZ gate detected by the gate detection unit 140 into the equivalent circuit 51. Further, the gate conversion unit 150 converts the CCZ gate for the same combination of quantum bits as the CCZ gate converted into the equivalent circuit into an equivalent circuit obtained by symmetrically moving the elements of the converted equivalent circuit. For example, the gate conversion unit 150 converts the CCZ gate into an equivalent circuit having an arrangement in which each of the elements of the equivalent circuit 51 is symmetrically moved up and down.

Note that lines coupling between each of the elements illustrated in FIG. 7 indicate a part of communication paths, and communication paths other than the illustrated communication paths are also configurable. Further, the functions of each of the elements illustrated in FIG. 7 may be implemented by causing a computer to execute a program module corresponding to the element.

Next, the conversion information 121 stored in the storage unit 120 will be described in detail.

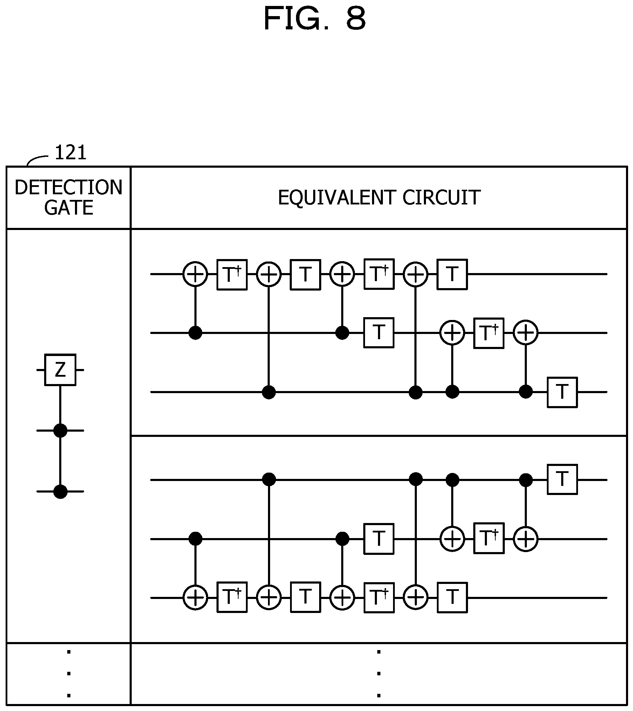

FIG. 8 is a diagram illustrating an example of conversion information. The conversion information 121 includes columns of a detection gate and an equivalent circuit. In the column of the detection gate, gates to be detected are set. An equivalent circuit of the gate to be detected is set in the column of the equivalent circuit. For example, the CCZ gate, the equivalent circuit 51, and the equivalent circuit having an arrangement in which each of the elements of the equivalent circuit 51 is symmetrically moved up and down are registered in the conversion information 121 in association with each other.

Next, a conversion process of the CCX gate by the gate conversion unit 150 will be described.

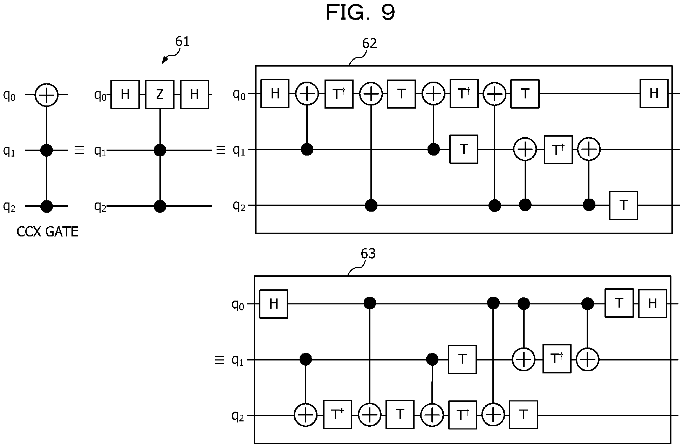

FIG. 9 is a diagram illustrating an example of the conversion process of the CCX gate. The CCX gate indicates that the X gate is operated on one target bit (the bit is inverted) when two control bits are "1". In the quantum circuit, a symbol obtained by combining a circle and + is arranged on a line corresponding to a quantum bit serving as the target bit of the CCX gate, and points coupled to the symbol by lines are arranged on lines corresponding to quantum bits serving as the two control bits, respectively. The gate conversion unit 150 converts the CCX gate included in the quantum circuit into an equivalent circuit in which the H gate and the CCZ gate are combined.

The equivalent circuit 61 is a quantum circuit equivalent to a CCX gate in which the quantum bits $q_1$ and $q_2$ are used as control bits and the quantum bit $q_0$ is used as a target bit. In the equivalent circuit 61, an H gate for the quantum bit $q_0$, CCZ gates for the quantum bits $q_0$, $q_1$, and $q_2$, and an H gate for the quantum bit $q_0$ are arranged side by side. The gate conversion unit 150 converts the CCZ gate included in the equivalent circuit 61 so as to convert the equivalent circuit 61 into the equivalent circuit 62,63.

The equivalent circuit 62 is obtained by converting the CCZ gate included in the equivalent circuit 61 into the equivalent circuit 51. Further, the equivalent circuit 63 is obtained by converting the CCZ gate included in the equivalent circuit 61 into an equivalent circuit having an arrangement in which each of the elements of the equivalent circuit 51 is symmetrically moved up and down.

In this way, the gate conversion unit 150 may convert the CCX gate included in the quantum circuit into an equivalent circuit including the CCZ gate. Then, the gate conversion unit 150 converts the CCZ gate into an equivalent circuit, and thus may suppress the gate operation from being biased to a specific quantum bit in the quantum circuit including the CCX gate.

Next, a conversion process of the CnN0T gate by the gate conversion unit 150 will be described.

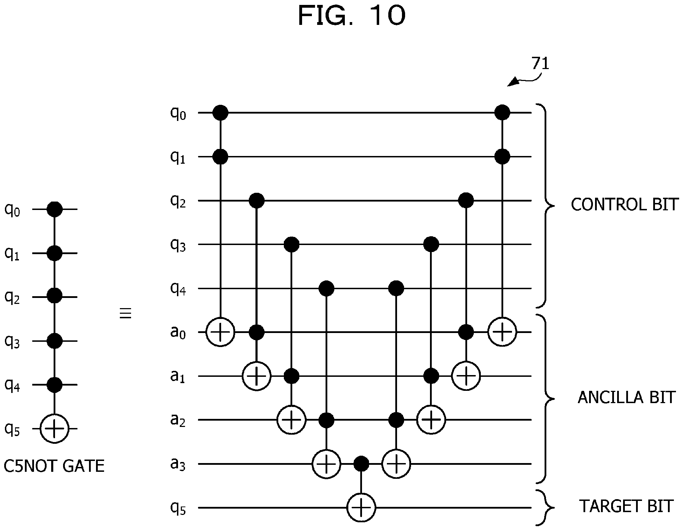

FIG. 10 is a diagram illustrating an example of the conversion process of the CnN0T gate. The CnN0T gate indicates that a bit of one target bit is to be inverted when n control bits are "1". In the quantum circuit, a symbol obtained by combining a circle and + is arranged on a line corresponding to a quantum bit serving as the target bit of the CnN0T gate, and points coupled to the symbol by lines are arranged on lines corresponding to quantum bits serving as the n control bits, respectively. The gate conversion unit 150 converts the CnN0T gate included in the quantum circuit into an equivalent circuit in which the CCX gate and the CNOT gate are combined.

The equivalent circuit 71 is a quantum circuit equivalent to a C5NOT gate in which the quantum bits $q_0$, $q_1$, $q_2$, $q_3$, and $q_4$ are used as control bits and the quantum bit $q_5$ is used as a target bit. The equivalent circuit 71 includes a CCX gate in which any two of the quantum bits $q_0$ to $q_4$, $a_0$, $a_1$, $a_2$, and $a_3$ are set as control bits, and any one of the quantum bits $q_0$ to $q_4$ and $a_0$ to $a_3$ is set as a target bit. Note that the quantum bits $a_0$ to $a_3$ are ancilla bits. The conversion of the CnN0T gate uses n-1 ancilla bits.

The equivalent circuit 71 includes two CCX gates in which the quantum bits $q_0$ and $q_1$ are set as control bits and the quantum bit $a_0$ is set as a target bit. Further, the equivalent circuit 71 includes two CCX gates in which the quantum bits $q_2$ and $a_0$ are set as control bits and the quantum bit $a_1$ is set as a target bit. Further, the equivalent circuit 71 includes two CCX gates in which the quantum bits $q_3$ and $a_1$ are set as control bits and the quantum bit $a_2$ is set as a target bit. Further, the equivalent circuit 71 includes two CCX gates in which the quantum bits $q_4$ and $a_2$ are set as control bits and the quantum bit $a_3$ is set as a target bit. Further, The equivalent circuit 71 includes one CNOT gate in which the quantum bit $a_3$ is set as a control bit and the quantum bit $q_5$ is set as a target bit.

The gate conversion unit 150 may convert the CCX gate included in the equivalent circuit 71 into an equivalent circuit in which the CCZ gate and the H gate are combined.

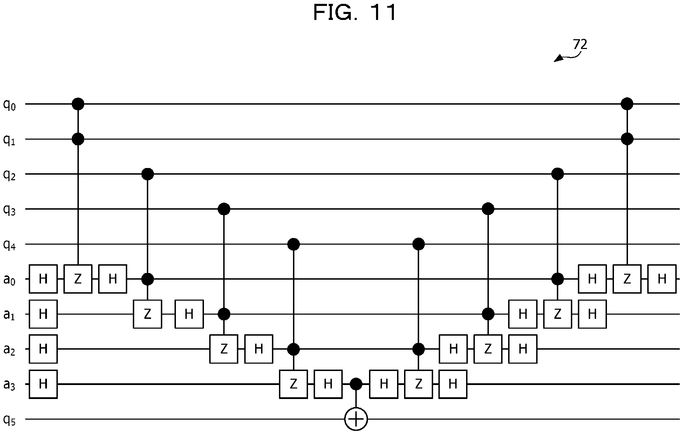

FIG. 11 is a diagram illustrating an example of an equivalent circuit of a CnN0T gate. The equivalent circuit 72 is obtained by converting the CCX gate included in the equivalent circuit 71 into an equivalent circuit in which a CCZ gate and an H gate are combined. For example, the equivalent circuit 72 includes two CCZ gates for a combination of the same quantum bits. For example, the equivalent circuit 72 includes two CCZ gates for the quantum bits $q_0$, $q_1$, and $a_0$.

The gate conversion unit 150 converts one of the two CCZ gates for the combination of the same quantum bits included in the equivalent circuit 72 into the equivalent circuit 51, and converts the other into an equivalent circuit having an arrangement in which each of the elements of the equivalent circuit 51 is symmetrically moved up and down. Thus, the gate conversion unit 150 may suppress the gate operation from being biased to a specific quantum bit in the quantum circuit including the CnN0T gate.

Next, the procedure of a quantum circuit conversion process will be described in detail.

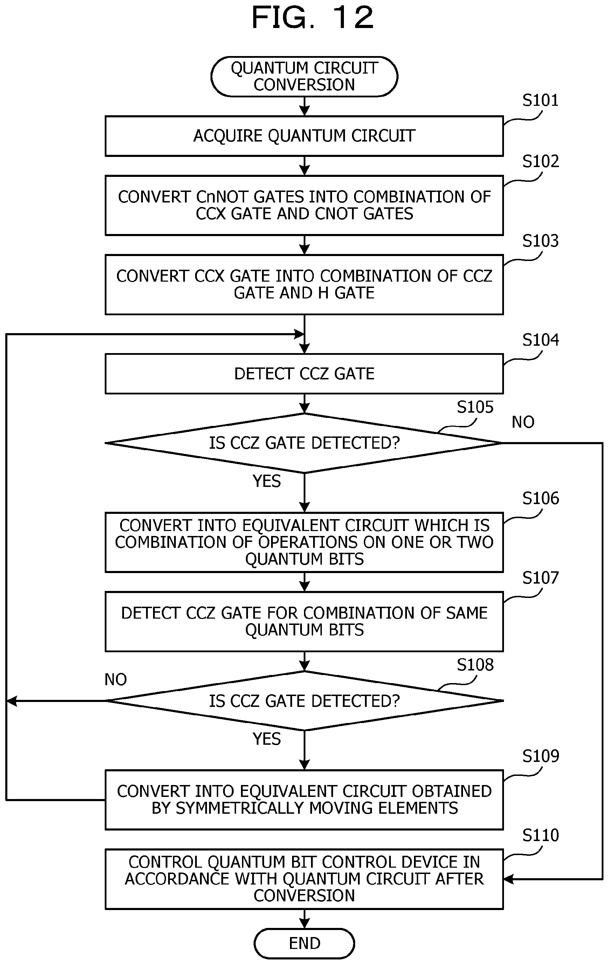

FIG. 12 is a flowchart illustrating an example of the procedure of the quantum circuit conversion process. The process illustrated in FIG. 12 will be described below in order of a step number.

[Step S101] The quantum computation control unit 130 acquires a quantum circuit. For example, the quantum computation control unit 130 receives a request for the quantum computation by the quantum computer 300 and a quantum circuit from the terminal devices 31, 32,....

[Step S102] The gate conversion unit 150 converts the CnN0T gates included in the quantum circuit into a combination of the CCX gate and the CNOT gate. For example, the gate conversion unit 150 detects the CnN0T gate included in the quantum circuit acquired in step S101. The gate conversion unit 150 generates an equivalent circuit in which a plurality of CCX gates, each in which two of control bit of the detected CnN0T gate and n-1 ancilla bits are set as control bits and one of the control bit of the detected CnN0T gate and the n-1 ancilla bits is set as a target bit, and a CNOT gate are combined. Then, the gate conversion unit 150 converts the detected CnN0T gate into the generated equivalent circuit.

[Step S103] The gate conversion unit 150 converts the CCX gate included in the quantum circuit into a combination of the CCZ gate and the H gate. For example, the gate conversion unit 150 detects the CCX gate included in the quantum circuit converted in step S102. The gate conversion unit 150 generates an equivalent circuit in which an H gate for the target bit of the detected CCX gate, a CCZ gate for the control bit and the target bit, and an H gate for the target bit are arranged side by side. Then, the gate conversion unit 150 converts the detected CCX gate into the generated equivalent circuit.

[Step S104] The gate detection unit 140 detects one CCZ gate from the quantum circuit.

[Step S105] The gate detection unit 140 determines whether or not the CCZ gate is detected from the quantum circuit in step S104. When the gate detection unit 140 determines that the CCZ gate is detected from the quantum circuit in step S104, the process proceeds to step S106. Further, if the gate detector 140 determines in step S104 that no CCZ gate is detected from the quantum circuit, the process proceeds to step S110.

[Step S106] The gate conversion unit 150 converts the CCZ gate detected in step S104 into an equivalent circuit which is a combination of operations on one or two quantum bits. For example, the gate conversion unit 150 converts the CCZ gate detected in step S104 into the equivalent circuit 51 registered in the conversion information 121.

[Step S107] The gate detection unit 140 detects one CCZ gate for the combination of the same quantum bits as the CCZ gate detected in step S104 from the quantum circuit.

[Step S108] The gate detection unit 140 determines whether or not a CCZ gate is detected from the quantum circuit in step S107. When the gate detection unit 140 determines that the CCZ gate is detected from the quantum circuit in step S107, the process proceeds to step S109. If the gate detection unit 140 determines in step S107 that no CCZ gate is detected from the quantum circuit, the process proceeds to step S104.

[Step S109] The gate conversion unit 150 converts the CCZ gate detected in step S107 into an equivalent circuit obtained by symmetrically moving the elements of the equivalent circuit converted in step S106. For example, the gate conversion unit 150 converts the CCZ gate detected in step S107 into an equivalent circuit having an arrangement in which each of the elements of the equivalent circuit 51 registered in the conversion information 121 is symmetrically moved up and down. Then, the process proceeds to step S104.

[Step S110] The quantum computation control unit 130 controls the quantum bit control device 200 in accordance with the quantum circuit after the conversion. In this way, the gate conversion unit 150 converts one of the CCZ gates for the combination of the same quantum bits into an equivalent circuit, and converts the other into an equivalent circuit having an arrangement in which each of the elements of the equivalent circuit 51 is symmetrically moved up and down. Thus, the gate converter 150 may suppress the gate operation from being biased to a specific quantum bit.

Note that the gate conversion unit 150 converts the CnN0T gate into a combination of the CCX gate and the CNOT gate, converts the CCX gate into a combination of the CCZ gate and the H gate, and then converts the CCZ gate. Thus, the gate converter 150 may suppress the gate operation from being biased to a specific quantum bit even when the quantum circuit includes the CCX gate or the CnN0T gate.

Next, the quantum circuit after conversion will be described.

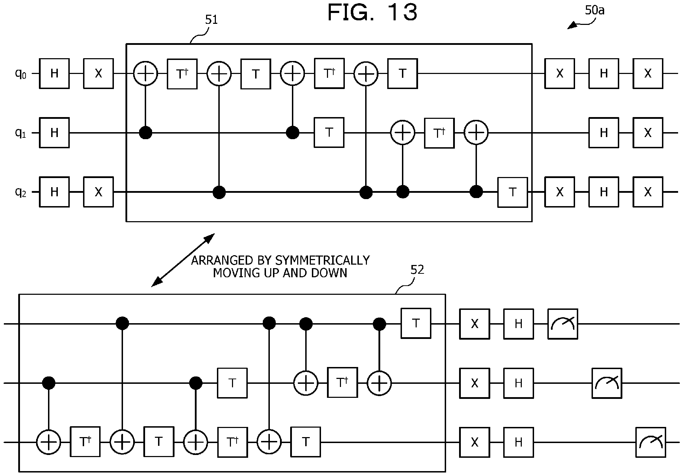

FIG. 13 is a diagram illustrating an example of a quantum circuit after conversion. The gate conversion unit 150 converts the quantum circuit 50 into the quantum circuit 50a by the quantum circuit conversion process. The quantum circuit 50a is obtained by converting one of the two CCZ gates included in the quantum circuit 50 into an equivalent circuit 51 and converting the other into an equivalent circuit 52. The equivalent circuit 52 is an equivalent circuit having an arrangement in which each of the elements of the equivalent circuit 51 is symmetrically moved up and down. In the equivalent circuit 52, the arrangement of each of the elements of the equivalent circuit 51 is reversed with respect to the line corresponding to the quantum bit $q_1$.

When the quantum computation control unit 130 acquires the quantum circuit 50, the quantum computation control unit 130 controls the quantum bit control apparatus 200 according to the quantum circuit 50a converted by the gate conversion unit 150. The quantum bit control apparatus 200 performs gate operations on each of the quantum bits in an order indicated in the quantum circuit 50a. Accordingly, the bias of the gate operation to a specific quantum bit is suppressed compared to a case where the two CCZ gates included in the quantum circuit 50 are converted into the equivalent circuit 51.

Next, the influence of noise included in the gate operation on the quantum computation will be described.

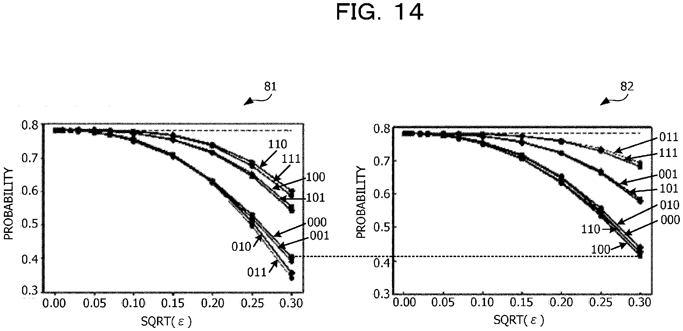

FIG. 14 is a diagram (part 1) illustrating an example of a relationship between a quantum computation result and a noise. A graph 81 indicates a result of simulating the quantum computation by a quantum circuit in which two CCZ gates included in the Grover's algorithm of three quantum bits are converted into the equivalent circuit 51, while changing an amount of noise of the gate operation. The vertical axis of the graph 81 indicates an output probability of the state corresponding to the correct answer data. The horizontal axis of the graph 81 indicates the amount of noise included in the gate operation. Note that sqrt ($\varepsilon$) is an index of the amount of noise included in the gate operation. Each line of the graph 81 indicates a simulation result in a case where the state corresponding to the correct answer data is each of "000" to "111".

A graph 82 illustrates a result of simulating the quantum computation by a quantum circuit in which one of the two CCZ gates included in the Grover's algorithm of three quantum bits is converted into the equivalent circuit 51 and the other is converted into the equivalent circuit 52, while changing the noise amount of the gate operation. The vertical axis, the horizontal axis, and the lines of the graph 82 have the same meanings as those of the graph 81.

The graphs 81 and 82 indicate that, when there is no noise of the gate operation, the output probability of the state corresponding to the correct answer data is the theoretical value 0.781 indicated in Equation (7). Further, the graphs 81 and 82 indicate that the output probability of the state corresponding to the correct answer data decreases as the noise amount of the gate operation increases. Here, in the graph 82, the amount of decrease in the output probability with respect to the increase in the amount of noise is smaller than that in the graph 81. For example, the graphs 81 and 82 indicate that the influence of noise may be reduced more when the quantum computation is performed with a quantum circuit in which one of the two CCZ gates is converted into the equivalent circuit 51 and the other is converted into the equivalent circuit 52 than when the quantum calculation is performed with a quantum circuit in which the two CCZ gates are converted into the equivalent circuit 51.

In this way, the gate conversion unit 150 converts one of the CCZ gates for the combination of the same quantum bits into the equivalent circuit 51 and converts the other into the equivalent circuit 52, and thus it is possible to reduce an error that occurs due to the influence of noise included in the gate operation being biased to a specific quantum bit. Therefore, the gate conversion unit 150 may reduce errors in the quantum computation.

Note that the CCZ gate may be converted into an equivalent circuit other than the equivalent circuits 51 and 52 illustrated in the above example. The gate conversion unit 150 may convert the CCZ gate into an equivalent circuit other than the equivalent circuits 51 and 52.

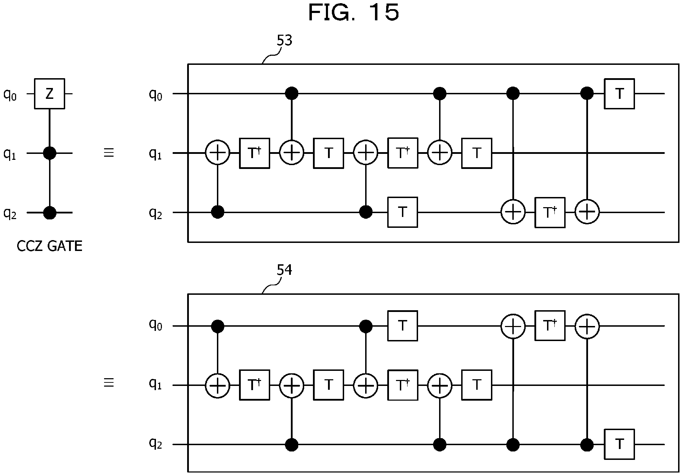

FIG. 15 is a diagram (part 2) illustrating an example of the equivalent circuit of the CCZ gate. The equivalent circuit 53 is equivalent to the CCZ gate for the quantum bits $q_0$, $q_1$, and $q_2$, and is a quantum circuit in which gates for two quantum bits or one quantum bit are combined. In the equivalent circuit 53, each of the elements arranged on the line corresponding to the quantum bit $q_0$ in the equivalent circuit 51 is arranged on the line corresponding to the quantum bit $q_1$. Further, in the equivalent circuit 53, each of the elements arranged on the line corresponding to the quantum bit $q_1$ in the equivalent circuit 51 is arranged on the line corresponding to the quantum bit $q_2$. Further, in the equivalent circuit 53, each of the elements arranged on the line corresponding to the quantum bit $q_2$ in the equivalent circuit 51 is arranged on the line corresponding to the quantum bit $q_0$.

The equivalent circuit 54 is equivalent to the CCZ gate for the quantum bits $q_0$, $q_1$, and $q_2$, and is an equivalent circuit having an arrangement in which each of the elements of the equivalent circuit 53 is symmetrically moved up and down. In the equivalent circuit 54, the arrangement of each of the elements of the equivalent circuit 53 is reversed with respect to the line corresponding to the quantum bit $q_1$. The gate conversion unit 150 may convert one of the CCZ gates for the combination of the same quantum bits into the equivalent circuit 53 and convert the other into the equivalent circuit 54.

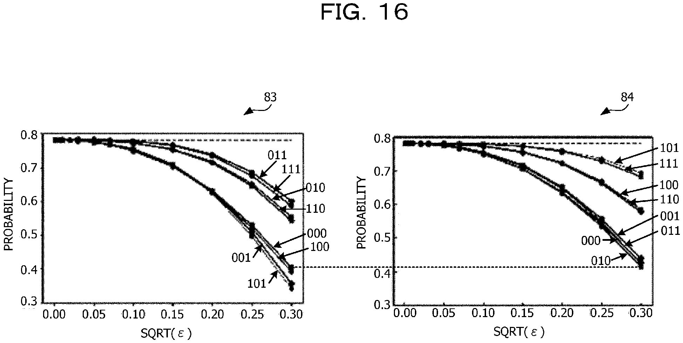

FIG. 16 is a diagram (part 2) illustrating an example of the relationship between the quantum computation result and the noise. A graph 83 represents a result of simulating the quantum computation by a quantum circuit in which two CCZ gates included in the Grover's algorithm of three quantum bits are converted into the equivalent circuit 53, while changing the amount of noise of the gate operation. Further, a graph 84 represents a result of simulating the quantum computation by a quantum circuit in which one of the two CCZ gates included in the Grover's algorithm of three quantum bits is converted into the equivalent circuit 53 and the other is converted into the equivalent circuit 54, while the amount of noise of the gate operation being changed. The vertical axis, the horizontal axis, and the lines of the graphs 83 and 84 have the same meanings as those of the graph 81.

The graphs 83 and 84 indicate that the output probability of the state corresponding to the correct answer data decreases when the amount of noise of the gate operation increases, similarly to the graphs 81 and 82. Further, in the graph 84, the amount of decrease in the output probability with respect to the increase in the amount of noise is smaller than that in the graph 83. Therefore, the graphs 83 and 84 indicate that the influence of noise may be reduced by performing the quantum calculation using a quantum circuit in which one of the two CCZ gates is converted into the equivalent circuit 53 and the other is converted into the equivalent circuit 54, compared to performing the quantum calculation using a quantum circuit in which the two CCZ gates are converted into the equivalent circuit 53.

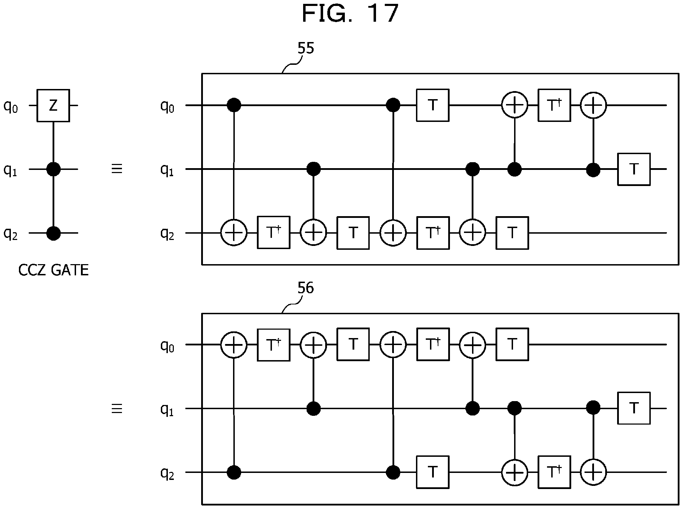

FIG. 17 is a diagram (part 3) illustrating an example of the equivalent circuit of the CCZ gate. The equivalent circuit 55 is equivalent to the CCZ gate for the quantum bits $q_0$, $q_1$, and $q_2$, and is a quantum circuit in which gates for two quantum bits or one quantum bit are combined. In the equivalent circuit 55, each of the elements arranged on the line corresponding to the quantum bit $q_0$ in the equivalent circuit 51 is arranged on the line corresponding to the quantum bit $q_2$. Further, in the equivalent circuit 55, each of the elements arranged on the line corresponding to the quantum bit $q_1$ in the equivalent circuit 51 is arranged on the line corresponding to the quantum bit $q_0$. Further, in the equivalent circuit 55, each of the elements arranged on the line corresponding to the quantum bit $q_2$ in the equivalent circuit 51 is arranged on the line corresponding to the quantum bit $q_1$.

The equivalent circuit 56 is equivalent to the CCZ gate for the quantum bits $q_0$, $q_1$, and $q_2$, and is an equivalent circuit having an arrangement in which each of the elements of the equivalent circuit 55 is symmetrically moved up and down. In the equivalent circuit 56, the arrangement of each of the elements of the equivalent circuit 55 is reversed with respect to the line corresponding to the quantum bit $q_1$. The gate conversion unit 150 may convert one of the CCZ gates for the combination of the same quantum bits into the equivalent circuit 55 and convert the other into the equivalent circuit 56.

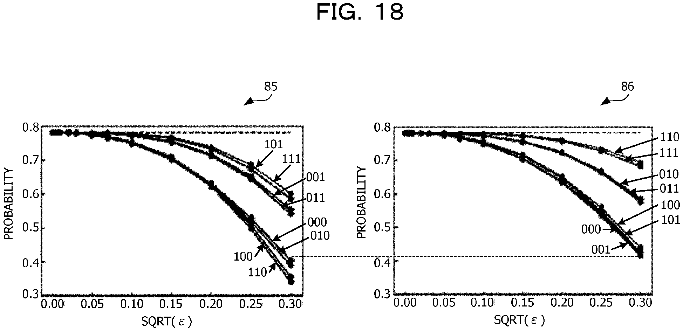

FIG. 18 is a diagram (part 3) illustrating an example of the relationship between the quantum computation result and the noise; A graph 85 represents a result of simulating the quantum computation by a quantum circuit in which two CCZ gates included in the Grover's algorithm of three quantum bits are converted into the equivalent circuit 55, while changing the amount of noise of the gate operation. Further, a graph 86 represents a result of simulating the quantum computation by a quantum circuit in which one of the two CCZ gates included in the Grover's algorithm of three quantum bits is converted into the equivalent circuit 55 and the other is converted into the equivalent circuit 56, while changing the amount of noise of the gate operation. The vertical axis, the horizontal axis, and the lines of the graphs 85 and 86 have the same meanings as those of the graph 81.

The graphs 85 and 86 indicate that the output probability of the state corresponding to the correct answer data decreases when the amount of noise of the gate operation increases, similarly to the graphs 81 and 82. Further, in the graph 86, the amount of decrease in the output probability with respect to the increase in the amount of noise is smaller than that in the graph 85. Therefore, the graphs 85 and 86 indicate that the influence of noise may be reduced more when the quantum computation is performed by a quantum circuit in which one of the two CCZ gates is converted into the equivalent circuit 55 and the other is converted into the equivalent circuit 56 than when the quantum computation is performed by a quantum circuit in which the two CCZ gates are converted into the equivalent circuit 55.

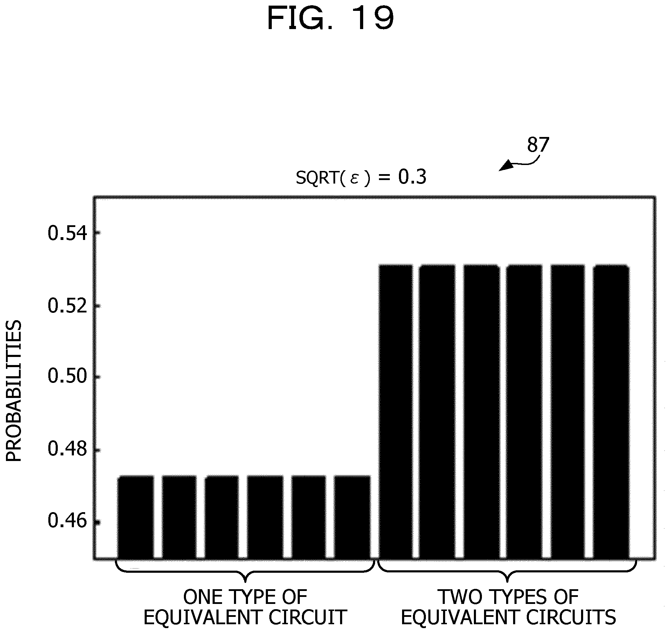

FIG. 19 is a diagram (part 4) illustrating an example of the relationship between the quantum computation result and the noise. A graph 87 indicates the output probability of the state corresponding to the correct answer data in the case of sqrt ($\varepsilon$) = 0.3 in each quantum computation in the simulation illustrated in FIG. 14, 16 and 18. A graph 87 indicates the output probability when the quantum computation is executed with sqrt ($\varepsilon$) = 0.3 by a quantum circuit (one type of equivalent circuit) in which two CCZ gates included in the quantum circuit are converted into the same equivalent circuit. Further, a graph 87 indicates the output probability when the quantum computation is executed with sqrt ($\varepsilon$) = 0.3 by a quantum circuit (two types of equivalent circuits) in which one of the two CCZ gates included in the quantum circuit is converted into the equivalent circuit having an arrangement in which each of the elements of the other equivalent circuit are symmetrically moved up and down.

The graph 87 indicates that the output probability is higher when the quantum computation is executed by the quantum circuit in which the two CCZ gates are converted into two types of equivalent circuits than when the quantum computation is executed by the quantum circuit in which the two CCZ gates are converted into one type of equivalent circuit. Therefore, the gate conversion unit 150 may reduce errors in the quantum computation by converting two CCZ gates into two types of equivalent circuits.

Note that, although the Grover's algorithm for three quantum bits has been described above as an example, the Grover's algorithm can be executed for four or more quantum bits.

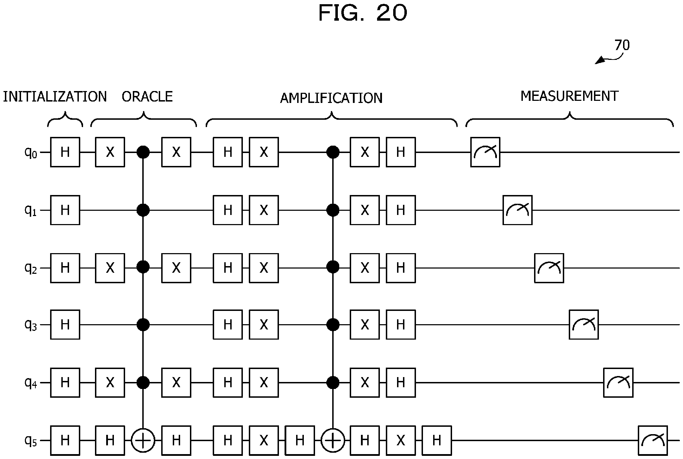

FIG. 20 is a diagram illustrating an example of a quantum circuit that executes the Grover's algorithm with six quantum bits. The quantum circuit 70 indicates the order of operations for each of the quantum bits $q_0$, $q_1$, $q_2$, $q_3$, $q_4$, and $q_5$ when the Grover's algorithm with a number of iterations of 1 is executed with the six quantum bits.

At the left end of the quantum circuit 70, H gates for the respective quantum bits $q_0$ to $q_5$ are arranged. As the first operation indicated by the quantum circuit 70, the H gate is operated on each of the quantum bits $q_0$ to $q_5$, and thus the quantum bits $q_0$ to $q_5$ become a superimposed state (being initialized). Further, in the quantum circuit 70, a combination of an X gate, an H gate, and a CnN0T gate indicating a process of applying an oracle is arranged on the right side of the H gate indicating an initialization. Further, in the quantum circuit 70, a combination of an H gate, an X gate, and a CnN0T gate indicating an amplification process is arranged on the right side of the combination of the gates indicating the oracle. Further, in the quantum circuit 70, observations for the respective quantum bits $q_0$ to $q_5$ are arranged on the right side of the combination of the gates indicating the amplification process. By the observation illustrated in the quantum circuit 70, a result of performing the inversion amplification process of the Grover's algorithm of six quantum bits once is output.

The gate conversion unit 150 converts the CnN0T gate included in the quantum circuit 70 into a combination of the CCX gate and the CNOT gate, and converts the CCX gate into a combination of the CCZ gate and the H gate. Then, the gate conversion unit 150 converts one of the two CCZ gates for the combination of the same quantum bits converted from the CnN0T gate into the equivalent circuit 51 and converts the other into the equivalent circuit 52.

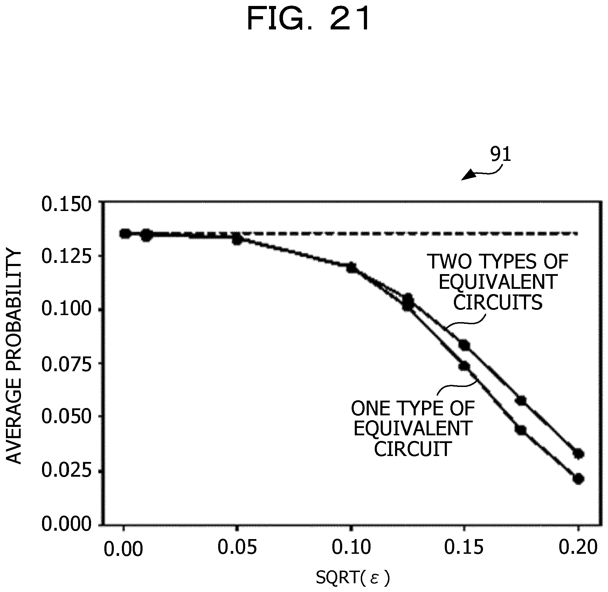

FIG. 21 is a diagram (part 5) illustrating an example of the relationship between the quantum computation result and the noise; A graph 91 illustrates a result of simulating the quantum computation by a quantum circuit obtained by converting a CnN0T gate included in the Grover's algorithm of six quantum bits, while changing an amount of noise of gate operation. The vertical axis of the graph 91 indicates an average of the output probabilities of the states corresponding to the correct answer data in each of the cases where the states corresponding to the correct answer data are "000000" to "111111". The horizontal axis of the graph 91 indicates the amount of noise included in the gate operation.

The graph 91 indicates a result of simulating the quantum computation by a quantum circuit (one type of equivalent circuit) in which the two CCZ gates for the combination of the same quantum bits converted from CnN0T gates are converted into the equivalent circuit 51. Further, the graph 91 indicates a result of simulating the quantum computation by a quantum circuit (two types of equivalent circuits) in which one of the two CCZ gates for the combination of the same quantum bits converted from the CnN0T gate is converted into the equivalent circuit 51 and the other is converted into the equivalent circuit 52.

According to the graph 91, the amount of decrease in the output probability is smaller in the case where the quantum computation is executed by the quantum circuit in which the two CCZ gates are converted into the two types of equivalent circuits than in the case where the quantum computation is executed by the quantum circuit in which the two CCZ gates are converted into the one type of equivalent circuit. For example, the graph 91 indicates that the influence of noise may be reduced more in the case where quantum computation is executed by the quantum circuit in which the two CCZ gates are converted into the two types of equivalent circuits than in the case where the quantum computation is executed by the quantum circuit in which the two CCZ gates are converted into the one type of equivalent circuit.

In this way, the gate converter 150 may reduce errors that occur when the influence of noise included in the gate operation is biased to a specific quantum bit even in the quantum computation executed by the quantum circuit including the CnN0T gate.

The embodiments have been described above, but the configurations of the respective units described in the embodiments may be replaced with other configurations having the same functions. Further, any other component or process may be added. Furthermore, two or more arbitrary configurations (features) of the above-described embodiments may be combined.

The foregoing merely illustrates the principles of the disclosure. Further, since numerous modifications and changes will readily occur to those skilled in the art, it is not desired to limit the disclosure to the exact construction and application illustrated and described, and accordingly, all corresponding modifications and equivalents may be regarded to fall within the scope of the disclosure defined by the appended claims and equivalents thereto.

DESCRIPTION OF SYMBOLS

1 first quantum circuit
2 first equivalent circuit
3 second equivalent circuit
10 quantum circuit design apparatus
11 processing unit

**Claims**

1. A quantum circuit design apparatus comprising:
   a processing unit configured to:

   detect a first gate indicating a predetermined operation on a plurality of first quantum bits among a plurality of quantum bits included in a first quantum circuit, which includes a plurality of elements and indicates an operation order on the plurality of quantum bits by an arrangement of each of the plurality of elements, and a second gate which indicates the predetermined operation; and
   generate a second quantum circuit by converting the first gate into a first equivalent circuit in the first quantum circuit and converting the second gate into a second equivalent circuit in which the plurality of elements are symmetrically moved in an arrangement direction of the plurality of first quantum bit.

2. The quantum circuit design apparatus according to claim 1, wherein
   the predetermined operation is an operation which inverts a phase of one target bit of the plurality of first quantum bits in accordance with two control bits of the plurality of first quantum bits.1

3. The quantum circuit design apparatus according to claim 2, wherein
   the processing unit converts a third gate which inverts a bit of the one target bit of the plurality of first quantum bits in accordance with the two control bits of the plurality of first quantum bits into a third equivalent circuit including the predetermined operation.

4. The quantum circuit design apparatus according to claim 3, wherein
   the processing unit converts a fourth gate which inverts a bit of one target bit of a plurality of second quantum bits including the plurality of first quantum bits in accordance with three or more control bits of the plurality of second quantum bits into a fourth equivalent circuit including the third gate.

5. A quantum circuit design program causing a computer to execute a processing of:

   detecting a first gate indicating a predetermined operation on a plurality of first quantum bits among a plurality of quantum bits included in a first quantum circuit, which includes a plurality of elements and indicates an operation order on the plurality of quantum bits by an arrangement of each of the plurality of elements, and a second gate which indicates the predetermined operation; and
   generate a second quantum circuit by converting the first gate into a first equivalent circuit in the first quantum circuit and converting the second gate into a second equivalent circuit in which the plurality of elements are symmetrically moved in an arrangement direction of the plurality of first quantum bit.

6. A quantum circuit design method comprising:

   detecting a first gate indicating a predetermined operation on a plurality of first quantum bits among a plurality of quantum bits included in a first quantum circuit, which includes a plurality of elements and indicates an operation order on the plurality of quantum bits by an arrangement of each of the plurality of elements, and a second gate which indicates the predetermined operation; and
   generate a second quantum circuit by converting the first gate into a first equivalent circuit in the first quantum circuit and converting the second gate into a second equivalent circuit in which the plurality of elements are symmetrically moved in an arrangement direction of the plurality of first quantum bit.

# FIG. 1

# FIG. 2

# FIG. 3

# FIG. 4

FIG. 5

FIG. 6

# FIG. 7

# FIG. 8

FIG. 9

CCX GATE

# FIG. 10

FIG. 11

# FIG. 12

```
        ┌─────────────────────┐
        │  QUANTUM CIRCUIT    │
        │     CONVERSION      │
        └──────────┬──────────┘
                   │
                   ▼                                    S101
        ┌─────────────────────────────────┐
        │    ACQUIRE QUANTUM CIRCUIT       │
        └──────────┬──────────────────────┘
                   │                                    S102
                   ▼
        ┌─────────────────────────────────┐
        │ CONVERT CnNOT GATES INTO         │
        │ COMBINATION OF CCX GATE AND      │
        │ CNOT GATES                       │
        └──────────┬──────────────────────┘
                   │                                    S103
                   ▼
        ┌─────────────────────────────────┐
        │ CONVERT CCX GATE INTO            │
        │ COMBINATION OF CCZ GATE AND      │
        │ H GATE                           │
        └──────────┬──────────────────────┘
                   │                                    S104
                   ▼
        ┌─────────────────────────────────┐
        │        DETECT CCZ GATE           │
        └──────────┬──────────────────────┘
                   │                                    S105
                   ▼                          NO
        ◇ IS CCZ GATE DETECTED? ◇──────────────►
                   │ YES
                   ▼                                    S106
        ┌─────────────────────────────────┐
        │ CONVERT INTO EQUIVALENT CIRCUIT  │
        │ WHICH IS COMBINATION OF          │
        │ OPERATIONS ON ONE OR TWO         │
        │ QUANTUM BITS                     │
        └──────────┬──────────────────────┘
                   │                                    S107
                   ▼
        ┌─────────────────────────────────┐
        │ DETECT CCZ GATE FOR COMBINATION  │
        │ OF SAME QUANTUM BITS             │
        └──────────┬──────────────────────┘
                   │                                    S108
           NO      ▼
        ◄───◇ IS CCZ GATE DETECTED? ◇
                   │ YES
                   ▼                                    S109
        ┌─────────────────────────────────┐
        │ CONVERT INTO EQUIVALENT CIRCUIT  │
        │ OBTAINED BY SYMMETRICALLY        │
        │ MOVING ELEMENTS                  │
        └──────────┬──────────────────────┘
                   │                                    S110
                   ▼
        ┌─────────────────────────────────┐
        │ CONTROL QUANTUM BIT CONTROL      │
        │ DEVICE IN ACCORDANCE WITH        │
        │ QUANTUM CIRCUIT AFTER CONVERSION │
        └──────────┬──────────────────────┘
                   │
                   ▼
              ┌─────────┐
              │   END   │
              └─────────┘
```

# FIG. 13

ARRANGED BY SYMMETRICALLY
MOVING UP AND DOWN

FIG. 14

FIG. 15

CCZ GATE

FIG. 16

# FIG. 17

CCZ GATE

FIG. 18

# FIG. 19

FIG. 20

# FIG. 21

## INTERNATIONAL SEARCH REPORT

| International application No. |
|---|
| **PCT/JP2021/030184** |

**A. CLASSIFICATION OF SUBJECT MATTER**

*G06N 10/00*(2019.01)i
FI: G06N10/00

According to International Patent Classification (IPC) or to both national classification and IPC

**B. FIELDS SEARCHED**

Minimum documentation searched (classification system followed by classification symbols)

G06N10/00

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | ITOKO, Toshinari , RAYMOND, Rudy, IMAICHI, Takashi and MATSUO, Atsushi. Optimization of Quantum Circuit Mapping using Gate Transformation and Commutation. arXive.org [online], 18 October 2019, [retrieved on 15 October 2021], Internet:<URL:https://arxiv.org/pdf/1907.02686.pdf> 1. Introduction | 1-6 |
| A | MASLOV, Dmitri, DUECK, Gerhard W., MILLER, Michael D., and NEGREVERGNE, Camille. Quantum Circuit Simplification and Level Compaction, arXive.org [online], 27 February 2008, [retrieved on 15 October 2021], Internet: <URL:https://arxiv.org/pdf/quant-ph/0604001.pdf> III. TEMPLATES: DEFINITION | 1-6 |
| A | SEKI, Kazuhiro, SHIRAKAWA, Tomonori and YUNOKI, Seiji. Symmetry-adapted variational quantum eigensolver, arXive.org [online], 29 May 2020, [retrieved on 15 October 2021], Internet: <URL:https://arxiv.org/pdf/1912.13146.pdf> III. SPATIAL SYMMETRIES | 1-6 |

☐ Further documents are listed in the continuation of Box C.    ☐ See patent family annex.

| | | |
|---|---|---|
| * | Special categories of cited documents: | |
| "A" | document defining the general state of the art which is not considered to be of particular relevance | |
| "E" | earlier application or patent but published on or after the international filing date | |
| "L" | document which may throw doubts on priority claim(s) or which is cited to establish the publication date of another citation or other special reason (as specified) | |
| "O" | document referring to an oral disclosure, use, exhibition or other means | |
| "P" | document published prior to the international filing date but later than the priority date claimed | |

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **15 October 2021** | **26 October 2021** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005250563 A
- US 7028275 B
- US 20040162640